# EUROPEAN PATENT SPECIFICATION

(11) **EP 0 499 719 B1**
(45) Date of publication and mention of the grant of the patent: **18.12.1996**
(21) Application number: 91200361.3
(22) Date of filing: 20.02.1991
(51) Int. Cl.: H04N 1/23, G03G 15/00

(54) **Digital image reproduction system**
Digitales Bildwiedergabesystem
Système de reproduction d'image numérique

(43) Date of publication of application: 26.08.1992
(73) Proprietor: Océ-Nederland B.V., 5914 CC Venlo (NL)
(72) Inventor: Geraedts, Johannes Mathilda Peter, NL-5944 BV Arcen (NL); Kradolfer, Theodorus Albertus Clemens, NL-5916 LC Venlo (NL); Oosterholt, Ronaldus Hermanus Theodorus, NL-5912 JB Venlo (NL)
(74) Representative: Hanneman, Henri W.A.M.

(56) References cited:
- EP-A- 0 310 891
- US-A- 4 711 556
- US-A- 4 748 513
- US-A- 4 956 667
- IBM TECHNICAL DISCLOSURE BULLETIN. vol. 25, no. 11a, April 1983, NEW YORK US pages 5630 - 5632; Conly and McDonald: "Automatic restoration of interrupted job"

## Description

The present invention relates to a digital image reproduction system including:
- printing means for printing image data in accordance with the respective associated reproduction parameters, said printing means being capable to operate in a continuous mode to produce printed copies at a predetermined frequency,
- input means for inputting digital image data of documents to be reproduced,
- a user interface permitting the user to set the reproduction parameters for a next job independently of the operating stage of the printing means, and to assign an immediate print status to a copying job,
- memory means for storing said image data and reproduction parameter data associated distinctly with the stored image data for executing a plurality of copying jobs, and
- a control system for monitoring the operation of the input means, user interface, memory means and printing means, for controlling the supply of image data and reproduction parameter data from said memory means to the printing means, for interrupting a further supply of data of the running job from the memory means to the printing means in a regular print mode, and for supplying subsequently instead of the data of the running job the data of a job having an immediate print status.
In a conventional electrophotographic copying machine, such as disclosed in US-A-4 213 694, an original document is optically imaged onto a photoconductor so as to create a latent image which is then developed and transferred to a sheet of receiving paper. In contrast to this, it is outstanding feature of a digital copier that the image data of the original document are transformed into digital data by means of a scanning section, and the digital data are then supplied to a printing section for printing the desired copy, after which the data are vanished.

The digital copier may be provided with additional input channels through which the copier can directly receive digital image data from other sources such as a workstation or a data transmission network. In this way, a complex image reproduction system is achieved which lends itself to a large variety of different applications.

The digital copying machine further offers the possibility to process the digital image data by means of a so called digital image processing unit before they are printed-out, so that the quality of the copies can be improved or the appearance of the printed image scan be modified. For example, the brightness and contrast of the printed copies or the reproduction scale can easily be adjusted with high accuracy by applying simple and quick image processing routines. For this purpose the digital image reproduction system can be provided advantageously with an interactive user interface for examination and adjustment of the brightness and contrast of the copies, and a further control of the reproduction processes.

If the digital copying machine is equipped with a memory for storing the image data, multiple copies of a document can be formed by scanning the original document only once and using the stored image data for printing as many copies as desired. Due to this feature, the digital copying machine is particularly usable as a so called product copier which is adapted to form large numbers of copies at high speed. Since the scanning section and the printing section of a digital copier operate substantially independently of each other, it is further possible to scan-in a new copying job and to adjust the printing parameters such as brightness, number of desired copies and the like while the printing section is still printing copies of a previous job.

However, if the digital copying machine is busy with a very large and time-consuming job, and a user wishes to make a comparatively small number of copies of another document, he can scan-in his job immediately, but it is inconvenient that he must wait for the resulting copies until the running or current job is completed. In such cases, it is therefore desirable to have a possibility to interrupt the running job and to carry out an immediate job.

US-A-4 099 860 describes an electrophotographic copier in which such an interrupt function is implemented. If the user wishes to interrupt a running job for making a number of interrupt copies, he presses an interrupt button, where upon the copying process in the copier is stopped and the printing parameters for the running job are stored in a memory.
Then, the user enters the parameters for the intermediate job, feeds-in the original document for this job and restarts the copier which can be regarded as a time-consuming action. After the intermediate job has been completed, the copier automatically retrieves the stored parameters and continues with the interrupted job. It is evident that such a use of the copier results in a substantial decreasing of the production rate, especially when subsequently some originals have to be printed again at a different parameter setting because of a low contrast or dark background of these originals. Particularly, it is of influence on the working of a high-speed copier which operates normally at a copy production rate of 60 sheets per minute or higher. Moreover, as the photoconductor of a high-speed copier moves at rather high speed, it may give rise to an enhanced ageing of the mechanical components of the copier if the copier is stopped again and again for performing an interrupt job in a way as described hereinbefore. At IBM Technical Disclosure Bulletin, Vol .25 at pages 5630 to 5632, discloses an image reproduction system with an interrupt feature. The reproduction parameter data of an interrupted job are restored upon completion of the interrupting job with a time delay between the end of the interrupt job and the automatic restoration of the interrupted job in order to allow enough time for an operator to continue the interrupt job if required.

However, there is no possibility of retaining the image data as the image forming is conventional analog. Additional, their is no disclosure to retain the reproduction parameter data even after resumption of the interrupted job.

It is an object of the invention to solve the above disadvantages of a digital image reproduction system as described in the preamble, and therefore to provide a digital image reproduction system which is capable of flexibly handling a plurality of jobs simultaneously without incurring any losses in the copy production rate, and which is therefore not subject to an enhanced ageing of the mechanical components.

According to the invention this object can be achieved by a digital image reproduction system in which:
- the memory means are adapted to retain the image data and the appertaining reproduction parameter data of a job having an immediate print status, after said image data and said reproduction parameter data are used for execution of said job having an immediate point status and after the control system resumes further supply of data of the running job from the memory means to the printing means and the user interface is adapted to readjust the latter reproduction parameter data after said image data and said reproduction parameter data are used for execution of the respective job.

Since, according to the invention, the image reproduction system comprises memory means for storing the image data and reproduction parameters for a plurality of jobs, and the control system is so designed that it can switch-over from one job to another each time the printer has completed a page or a predefined cluster of pages, it is possible to produce copies of different jobs in an interleaving manner without interrupting the operation of the printing means.

For example, the printing means may comprise a belt-type photoconductor on which a plurality of image receiving sections are arranged at narrow spacings. When the printing means are operative, the photoconductor belt is continuously driven at a comparatively high speed, and the image receiving sections are sequentially exposed by means of, for example, a laser device the laser signal of which is modulated in accordance with the image data received from the memory means. When the image receiving section for a specific page has been exposed, the time in which the clearance between the trailing edge of the exposed image receiving section and the leading edge of the subsequent image receiving section moves past the laser device is sufficient for the control system to switch over to a different memory location which is associated with a different job. Accordingly, the printing means may be switched-over from one job to another without leaving any blank spaces on the photoconductor belt.

Although it is generally possible to switch-over to another job each time a single page has been printed, it may sometimes be preferable to define clusters consisting of a plurality of pages which are to be printed immediately one after the other. For example, such a cluster may consists of the two pages of a double-sided copy, or, if the copies of a multi-page document are to be stapled, it may consist of the set of pages forming a complete single copy of the document.

In general, it is preferable to cancel the stored image data of a single page as soon as the copy has been made or if multiple copies are to be made, as soon as the last copy has been completed. In this context, "cancelling" of data means erasing the corresponding memory location or permitting the data to be replaced with new data. Thus the memory location can be used for storing the data of a subsequent job, so that the storage capacity of the memory is efficiently used. Similarly, the stored printing parameters for a given job may be cancelled as soon as the job has been completed.

However, in a preferred embodiment of the invention, the control system can be switched into an "immediate copy" mode, in which the so called "main copy" mode for performing a running job is interrupted for printing an interrupt copy or copies of a selected other job assigned with a higher priority, and in which the data for the selected job, i.e. the so-called priority job, are held even after the interrupt copies have been completed. This feature is particularly useful for making a test copy when the printing parameters for a subsequent job are adjusted. Since the image data and the printing parameters are held in the memory, the user may examine the test copy and may readjust subsequently the printing parameters so as to optimise the quality of the copies. In order to achieve a better reproduction of grey values of a photo, the digital image reproduction system can be provided advantageously with a "photo-button". In such a case the re-adjustment of the printing parameters can simply involve the touching of the photo-button. If the test copies are satisfactory, they may readily be taken as the final copies or, if multiple copies are desired, the system may be programmed to print the required number of copies either immediately or after the interrupted job has been completed.

It should be noted that, even in the immediate copy mode, the running job is interrupted only for the time required for making the test copy or the test copies. During the time intervals in which the user readjusts the printing parameters for the new job, the system continues with the previous job, so that the printer is used most effectively without any lost of time.

The operation of the system can be facilitated by providing an "interrupt copy" button which has a function similar to that of a "print" button of a usual copier but may be depressed even while the copier is busy with a previous job. When the interrupt copy button is depressed, the system is switched to the immediate copy mode and prints an interrupt copy of a new job. If the memory is capable of storing a plurality of jobs, the system may be so designed that it automatically takes the last job that has been scanned-in and for which the printing parameters have been entered as the job from which the interrupt copy is to be made. If the interrupt copy button is depressed before the desired number of copies have been entered, the system will produce only a single test copy, since the default setting for the desired number of copies is "1". On the other hand, if the interrupt copy button is depressed after entering a value due to the desired number of copies being greater than one, the system will print the desired number of copies, i.e. execute the complete job, before resuming the main copy mode for the previous job. If the user wishes to make a test copy only of the first page of a document or of specific pages for which the adjustment of the printing parameters must be expected to be critical (e.g. because of low contrast or dark background), he may first make a test copy only of the desired page or pages and then scan-in and copy the complete job after the printing parameters have been properly adjusted.
Alternatively, the immediate copy mode may be used for printing separately the "critical" pages of a complete job while the rest of the job or a complete job is printed afterwards in the normal mode. The image reproduction system according to the invention may thus be designed as a product copier for mass production of large numbers of copies and never the less can be used for making high-quality copies of specific documents.

In order to cancel the immediate copy mode, the digital image reproduction system may be provided with a "ready" button or with a reset unit for automatically cancelling the immediate copy mode if the reproduction parameters have not been changed within a predetermined time interval.
Preferably, these two criteria for cancelling the immediate copy mode are combined by an OR function.

The reproduction system according to the invention is preferably provided with a plurality of discharge ports for separately discharging the copies of the individual jobs. The copies produced in the immediate copy mode are preferably directed to a special discharge port which is positioned close to the operating panel, so that the user can readily take out and examine the test copies.

In addition to the possibility of interrupting a running job for copying an immediate job or for making a test copy, the system as described above offers the possibility to handle a plurality of jobs simultaneously on a time-sharing basis. This is particularly advantageous in a case where a very large number of copies have to be made from two or more different original documents. Then, the copies of both documents may be printed in an interleaving manner so that first copies of both documents are available within a short time. The time sharing system may also be used for making the copies in the immediate copy mode concurrently with the copies of the running job. In this way, it can be assured that a rather long job will be is completed within a reasonable time even if the job is frequently interrupted by immediate jobs printed in the immediate copy mode.

In the time sharing mode, the printing section may cyclically be switched to the different jobs so that one copy or cluster of copies of each job is printed in each cycle. Alternatively, it is possible to assign different weight factors to the jobs so that the printer time is unevenly distributed on the various jobs.

If the image reproduction system has a plurality of input channels, for receiving image data from one or more scanners and additionally from a workstation or a data transmission network the system can advantageously be operated in such a manner that the data received form the network or the workstation are only shortly buffered in the memory of the reproduction system and are printed-out with a higher priority than the scanned-in job (but possibly with a lower priority than the immediate copy mode). If the reproduction system is permanently in the receiving state in which it may receive data from the network the data received from the network and buffered in the memory can be regarded as a job with a "floating" number of pages. Then, a specific amount of storage capacity of the memory should be reserved for this job. If the reserved memory space is occupied to more than a specific percentage, the priority of weight factor assigned to the "network job" may be automatically increased on the cost of other jobs so as to avoid an overflow of the memory.

For a user friendly execution of the immediate print mode as to said critical pages the digital image reproduction system as described therein before can be provided advantageously with an interactive user interface which permits the user to select a specific job from a number of jobs that have been scanned-in and to select different printing parameters for the individual pages of this job, and further to examine and readjust, if necessary, the parameter setting of the selected pages on the basis of the respective images on a display. Thus, the priority job and the pages from which test copies have to be made can be selected by means of the user interface.

For this purpose, the user interface is adapted to display a video image of a document sheet that has been scanned-in by the digital image reproduction system after that document sheet has been placed on the exposure platen of the system. If the user changes the operating parameters of the system, for example, if he selects a different reduction scale or readjusts the position of the image on the receiving paper, the video image is adjusted accordingly. Thus, the display provides a preview of the resultant copy prior to the formation of the hard copy.

It is of general knowledge to use a user interface which remarkably improves the operability of the reproduction system in cases where the document consists only of a single page or of a plurality of pages having a uniform general appearance. If, however, a multiple page copy is to be formed by combining original documents of different configurations and/or qualities, it is impossible to adjust individually the operating parameters of the pages in such a system for achieving the desired uniform overall configuration of the document.

The user interface to be described hereinafter permits the operator to preview a plurality of pages of a scanned document simultaneously and to adjust the operating parameters of the reproduction system separately for each page.
Specifically the images of the pages displayed may be compared to each other and may be adjusted so as to achieve a uniform appearance even when the images on the source documents are non-uniform.

The interactive user interface as mentioned before is particularly applicable to a digital image reproduction system in which the pages of an original document are sequentially scanned and the image data are stored in page-sized image memories so that they may be readily displayed on the display of the user interface and may be printed-out after the appropriate adjustments have been made. Such a system may be equipped with digital image processing means which provide powerful editing functions. Since the scanning section and the printing section operate independently of each other, it is possible to scan-in a new job and to make the required adjustment operations therefor while the copies of the previous job are still being printed. Further, the digital image reproduction system can receive digital image data from remote devices such as facsimile transmitters, workstations and the like, and is thus particularly suited for combining documents from a variety of sources.

Preferably, the display device of the user interface is formed by a touch-sensitive screen on which dialog frames and reduced images of the scanned pages are displayed, and the selection of pages and the input of instructions is achieved by touching the images of the desired pages and command buttons displayed in the dialog frames. The reduction scale of the pages displayed on the screen is so selected that a sufficient number of pages are shown side by side and the layout of each page is still perceptible. Additionally, the screen images of the pages are animated to symbolize the print mode that has been selected by the user and/or the operating status of the reproduction system. The dialog frames displayed on the screen are buttons and are so structured that only those command buttons are shown on the screen which are needed for the selected adjustment operation and are actually executable under the present operating conditions.

This dialog structure avoids that an occasional user of the reproduction system is puzzled by a large variety of command buttons. Instead, the user is only confronted with the options which are actually available in the present situation and is guided through the adjustment procedure wherein the images of the document pages displayed on the screen provide immediate feedback of the effect of each adjustment operation.

Preferred embodiments of the invention will be explained below in conjunction with the accompanying drawings, in which:
Fig. 1 is an overall block diagram of a digital copier according to the invention;
Figs. 2 to 4 represent time charts illustrating different modes of operation of a digital copier;
Fig. 5 represents a flow chart illustrating the operation of a control system for controlling the transfer of data from the memory to the printer of the digital copier;
Fig. 6 is a view of the operating panel of the copier;
Figs. 7 and 8 are examples of images displayed on a screen provided on the operating panel;
Fig. 9 is a diagram illustrating different operating states of the copier and the respective associated display images;
Fig. 10 represents a flow diagram of a part of the diagram of Fig. 9; and
Fig. 11 gives a schematic string representation of a page.

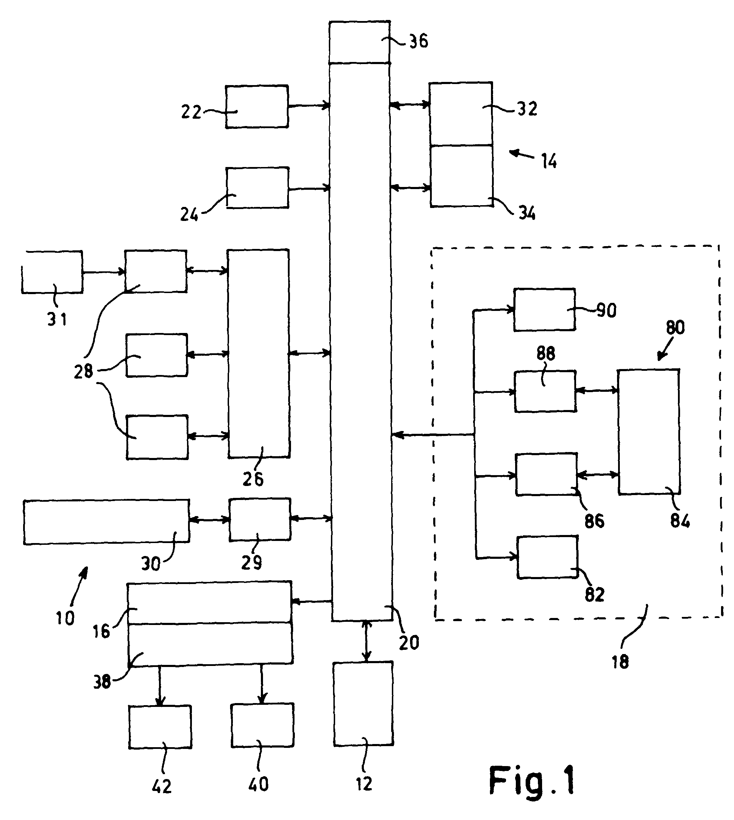

As is shown in Fig. 1 a digital copier is generally comprised of a number of input channels 10 for inputting digital image data, a digital image processor or digital image processing unit 12, a memory 14, a printing section 16, a user interface 18 and a control unit 20 for controlling the operation of the printing section 16 and the transfer of data between the input channels 10, the digital image processor 12 the memory 14 and the printing section 16 in accordance with a program or with commands input through the user interface 18.

The input channels 10 comprise a main scanner 22 equipped preferably with an automatic document feeder for sequentially scanning a plurality of original document sheets. The document feeder may be loaded with a plurality of multi-page documents which are separated from each other for example be separating sheets for distinguishing the document from each other and for handling them as different copying jobs. Preferably, the document feeder is capable of reversing the documents sheets or the main scanner is equipped with two optical scanning system for scanning double-sided documents.
In addition, there is provided an auxiliary scanner 24 the function of which will be explained now. The auxiliary scanner 24 can be used for inputting manually a job that shall be carried out immediately, without waiting until the printing section 16 has completed a running job. If an original document is fed into the auxiliary scanner 24, the scanner is activated automatically, and the digital image data are stored in the memory 14, which is there to also called image memory.
The input channels 10 further comprise a connection port 26 for external workstations 28, a facsimile receiver or the like and a connection port 29 for direct connection with a digital network 30 such as ISDN. If a workstation 28 cooperates with a separate scanner 31, such a scanner can also be used for inputting data. The digital image processor 12 is adapted to process and enhance the image data input through the input channels 10.

It is preferable to assign a job number to each separate job that has been scanned-in or input, and further a page number to each separate page of the respective job.
For example, all the pages which are scanned during a continuous scanning action may form a single job, and the individual pages of this job will get a different page number. Furthermore, specific buttons can be provided in the system for the determination of the extent of a single job.

The memory 14 is dividable into a plurality of memory sections each of which is associated with a specific printing job. Each of these memory sections includes an image memory for storing the image data received through one of the input channels and a parameter memory for storing printing parameters specifying the contrast, brightness, reproduction scale and the like of the copies to be printed. The printing parameters may include further parameters relating to the format of the printed images, the level of resolution or to specific options such as insertion of logos and the like.

As is shown in Fig. 1, the memory 14 is divided inter alia into a main memory 32 and a priority memory 34. The priority memory 34 is capable of storing the image data and printing parameters for a specific job, the so-called immediate or priority job which is to be printed with a high priority. This occurs by pushing down a special button, the so-called "interrupt copy button". All other jobs are stored in the main memory 32. It will however be understood that there need not be a physical sub-division of the memory 14 inter alia into the main memory 32 and the priority memory 34. Instead, any memory sections of the memory 14 may be defined as the priority memory 34 if the job stored therein is intended to be treated as the priority job. Such a memory section can be marked by a so-called priority status bit. Furthermore, it is possible to assign a priority status to a number of jobs. To manage the sequence of printing of a number of priority jobs, the control unit 20 is provided with a priority job register 36, in which a sequence of pointers is stored, each pointer comprising an indication to a memory section of a priority job. As the auxiliary scanner 24 is used frequently for obtaining an interrupt copy it is preferred to assign automatically a priority status to a job of documents scanned by this scanner 24.
Furthermore, each priority job also has a print priority status bit in register 36. When the latter status bit is high, the job will be printed as soon as possible.

The printing section 16 may be built for example as a laser printer and equipped with a copy discharge section 38 for directing the printed copies to different discharge ports which may be designed as copy trays 40 or sorters. An extra copy tray 42 reserved for copies belonging to the priority job, may be preferred and is then positioned closely to the user interface 18. Instead of a laser printer a different printer such as a LED-printer or inkjet printer can be used.

The user interface 18 is an interactive user interface having a display (not shown) on which the jobs stored in the memory 14 are symbolized by an appropriate identification or image view, so that the user can designate each individual job and can enter the printing parameters therefor. When such an identification or image view is displayed in a very detailed picture, the user can judge the correctness of the image printing parameters and readjust them, if necessary.

When the screen of the interactive user interface 18 is of a sufficiently large size to display a number of image views together on the screen, the image views can be compared among each others, so that differences in presentation quality for the copies to be reproduced, can be solved. As such a process needs much time, the respective job can be executed advantageously in an immediate copy mode.

The jobs received from the main scanner 22 are normally sequenced and printed in the order in which they have been scanned-in. However, the user may change this order by means of instructions input through the user interface 18. Further, the user interface 18 can be designed to offer the possibility to input commands for handling two or more jobs simultaneously.
If, for example, the first and second of the jobs that have been scanned-in shall be handled simultaneously, the user can assign the same sequence number (e.g. "1) to both jobs. When afterwards a printing instruction is input, the control unit 20 will retrieve the image data of the first page of the first job and send it to the printer section 16. As soon as this page is completed, the image data of the first page of the second job are supplied to the printer section 16, and afterwards the image data of the subsequent pages of both jobs are alternately supplied to the printer section 16 and printed-out. Further, the control unit 20 controls the copy discharge section 38 so that the copies of both jobs are discharged into different copy trays 40. Optionally, the user may assign different weight factors to the jobs that are handled simultaneously, so that, for example, two pages of the first job and only one page of the second job are printed in each cycle. Another option that is implemented in the user interface 18 is that of grouping automatically the pages of each job into clusters. The creation of clusters has the effect that the control unit 20 treats the clusters as inseparable units and switches over to another job only after all pages of the cluster have been completed. In practice, a command "double-sided copies" has the effect that the two pages to be printed on both sides of a copy sheet are treated as a cluster. Further, if multiple copies of a multi-page document are to be produced, it is convenient to specify that the pages forming a complete single copy of the document form a cluster. Accordingly, the copier will output a complete multi-page copy before turning to another job. This clustering scheme is particularly use-full if the copies are to be stapled manually or by means of an automatic stapler. In the preferred embodiment, the user interface 18 permits the user to select individually for each page or group of pages. In this case, cluster can be defined in any desired manner.

The jobs received via the connection ports 26 and 29 can be handled in the same manner as the jobs received from the main scanner 22. However, in a normal or main mode of operation, the data received through the connection port 29 are buffered in respective associated memory sections which have only a size of a few pages, and the data are immediately printed page-by-page or cluster-by-cluster. If the printer section 16 is busy with a job scanned-in through the main scanner 22 and in the mean time data are received through the connection port 29, the running job is interrupted as soon as the printing section 16 has completed the current page or cluster.

In the preferred embodiment, the control unit 20 is adapted to simultaneous processing of the data received through the input channels 10, so that the operation of the main scanner 22 need not be interrupted while data are received through one or more of the other input channels 26 and 29. When a complete job is stored in the priority memory 34, the user interface 18 queries the printing parameters for this job.
Subsequently, the user may enter a command "interrupt copy" (for example by depressing a so-called "interrupt copy button"), and in addition to the priority status bit with a high value the print priority status of this job will be now set to high, so that the job stored in the priority memory 34 will be printed as soon as the printing section 16 has completed the current page or cluster of pages of the running job. In this stage the job will be indicated by the name "immediate job". The copies of this job are delivered preferrably to the extra copy tray 42. As soon as the last copy of the immediate job has been printed, the printing section 16 is supplied with the data for the next page of the interrupted job. If there is not an extra copy tray 42, the copies of the immediate job have to be delivered to the usual copy tray or trays 40. In such a case, it is preferred to interrupt the print mode for a short period for enabling the user to take off the copies of the immediate job from the tray 40.

Optionally, the control unit 20 may comprise means for synchronizing the scanners 22, 24 and the connection ports 26 and 29 with the printing section 16, so that the received image data may be supplied directly to the printer without being buffered in the memory 14.

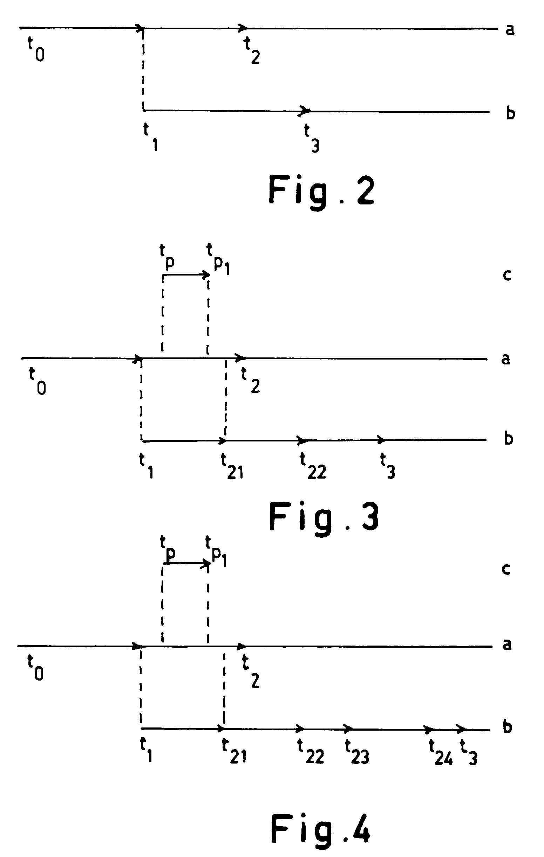

Examples of different modes of operation of the digital copier described above will now be explained in conjunction with Figs. 2 to 4.

In Fig. 2, the main scanner 22 starts scanning of a first job (job 1) at a time t0. When the document has been scanned-in completely and the printing parameters have been adjusted by means of the user interface 18, a so called "print" button is depressed at a time t1, and the first job is printed. Simultaneously, a second job (job 2) can be scanned-in, and the printing parameters for the second job can be set. When this is accomplished at time t2, the image data and printing parameters for a third job (job 3) can be input. At this time, the printing section 16 is still busy with printing the copies of job 1. When all copies of the first job are completed at a time t3, the printer continues automatically with printing the copies of job 2.

In Fig. 3, the jobs 1 and 2 are scanned-in successively in the same manner as described above, and the job 1 is first printed. The scanning and setting of parameters for the job 2 are accomplished at a time t2 while the copies of job 1 are still being printed. At a certain time tp, prior to time t2, a priority job is scanned-in by means of the auxiliary scanner 24.
When at a certain time tp1 the priority job has been scanned-in, the respective parameters have been adjusted and the command "interrupt copy" is entered for this priority job, the priority status as well as the print priority status of this job will be high. This means that the printing of job 1 is interrupted as soon as the current page or cluster of pages has been completed (e.g. at a time t21). The printer section 16 remains in operation but is now connected to the priority memory 4 to print the priority job having the immediate copy status.

Independently of the scanning action of the priority job, the user may enter the third job (job 3) trough the main scanner 22. At a time t22, the priority job is completed and the printing section 16 is connected again with the main memory 32 to continue with job 1. Since the image data and printing parameters for the immediate job are no longer needed, all the data of this job in the priority memory 34 will be erased after a predetermined delay time after the last copy of the immediate job has been discharged. At the time t3, the job 1 is completed and the printer section 16 starts with job 2.

In the operation scheme according to Fig. 3, the priority job may also be scanned-in through the main scanner 22. In this case, the remaining part of job 2 has to be removed temporarily and the priority job should be supplied to the main scanner 22 and to be treated as a normal new job (job 3). When the printing parameters have been adjusted, this job still remains selected so that the user may change the parameters, if desired. When for this job the "interrupt copy" command is entered the control unit 20 determines that the selected job does not belong to the normal sequence but is intended to be handled as a priority job having a priority status. Accordingly, the memory section where the data for this job are stored is defined as the priority memory 34.

Fig. 4 illustrates a different mode of operation in which a test copy is made for improving the adjustment of the printing parameters for a priority job.

The first part of the copying procedure illustrated in Fig. 4 is identical to that of Fig. 3. After the printing of job 1 has been interrupted at time t21, and a (single) test copy of the printing job has been printed and delivered to the extra copy tray 42, the printer continues subsequently with job 1 (at a time t22). After the user has examined the test copy, he may readjust the printing parameters, if necessary. When a better adjustment of grey values of photos will be achieved, the system can be provided advantageously with a specific "photo button". In such a case, the readjustment of the printing parameters can simply comprise the touching of the photo-button, which results in a standard parameter setting for the reproduction of photos. Furthermore, if an image to be copied has a raster pattern on the original sheet, it is advantageous to have a specific button for it on the copier. The delay time interval during which the contents of the priority memory 34 are held is restarted when the printing parameters are changed. Accordingly, the image data and printing parameters for the immediate job are memorized so that they can be used later on. If desired, the user can press the "interrupt copy" button once again (e.g. at time t23) in order to make another test copy. At this time the printer action for job 1 is interrupted as soon as possible, so that the printer procedure for the immediate job can be restarted. After the printer action for this immediate job has been completed at time t24 the printing section 16 for the job 1 will be restarted. If only a single copy is required and the quality of the test copy is satisfactory, the operator can use the test copy as the final copy. If multiple copies are needed, he sets the required number of copies. There are now three different print modes available. In a first print mode the execution and finishing of the printing action of the immediate job can be started immediately after the main print mode can be interrupted. When the desired number of copies have been produced, the main print mode will be restarted automatically. In a second print mode the execution and finishing of the printing action of the immediate job will be executed with priority after, however, the running job (in this case job 1) is fully completed. In a third print mode, the execution and finishing of the printing action of the priority job will be performed as a normal or main print mode for regular jobs. Then, this job will be placed in the queue of the jobs to be printed, i.e. after the last scanned job. As long as the ultimate printing action of an immediate job has not been completed, the respective data remain stored in the memory 14. One of these three modes will be installed in the digital printing system in accordance with the preference of the purchaser of the system.

In the example described above, the test copy of a multi-page document was considered to be a copy of all pages of the document. However, since the user interface offers the possibility to select only specific pages for printing, the user can specify during the parameter setting operation for a job, e.g. job 2, (and therefore between the times t1 and t2) that a test copy is made only of the first page or only of certain "critical" pages of the document.

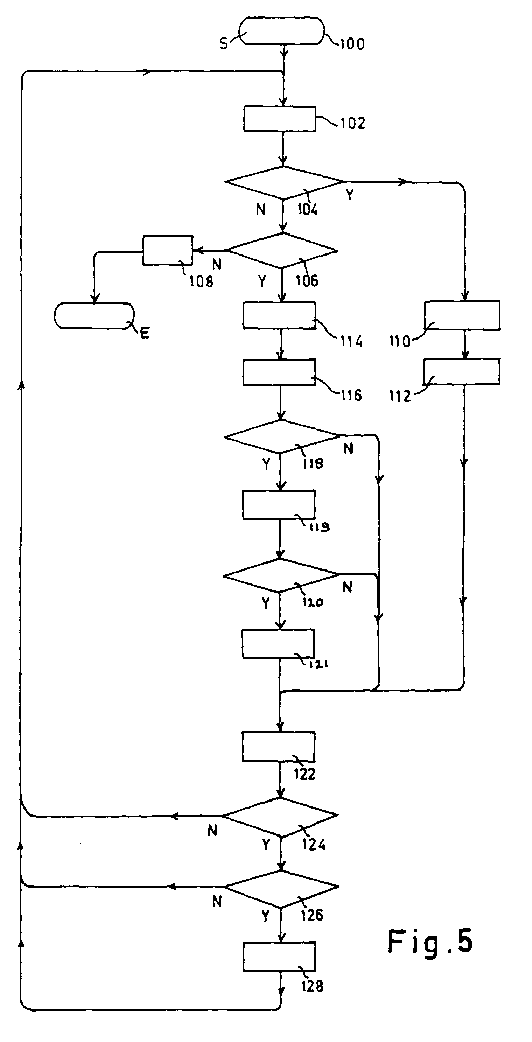

Fig. 5 shows a flow chart of a control program by which the operating schemes according to Figs. 3 and 4 for obtaining an interrupt copy or test copy can be achieved. For this purpose, the control program according to Fig. 5 is carried out by the control unit 20 each time a printing action is required. This occurs each time a printing action for obtaining a page or a cluster of pages has been completed, a print button or interrupt copy button has been pushed on, or an action with a similar result (e.g. by means of a workstation) has been given.

When the digital image reproduction system is switched on the program goes from the starting point 100 to step 102. At step 102 the current printer status bit and the next printer status bit are kept by the control unit 20. When a printing action is still running the current printer status bit is high, otherwise low. During the current printing action a next printer status bit can be given high by a new printer command when for example the interrupt copy button (or print button) is pushed on, or when the control unit 20 generates the status signal after data input and processed by the input channels 10 and image processor 12 respectively, is stored in the memory 14. When the digital image reproduction system is switched-on, the current printer status bit as well as the next printer status bit are set low.
When the program is at step 102, it checks the current printer status bit of the printing section 16 as well as its next printer status bit kept by the control unit 20. When the current printer status bit as well as the next printer status bit are low, the program remains in step 102, and the printing section 16 is out of operation. When the current printer status bit is low and the next printer status bit is or becomes high, the program goes to step 104, while it further exchanges the status values. Then the current printer status bit will be high and the next printer status bit low. When the current printer status bit is high, it means that the printing section 16 is already in operation for a current job. At step 104 the program will check whether there is printable data available in the priority memory 34. Such data should have a priority status bit as well as a print priority status bit at high value. If this is not the case (N), the program goes to step 106, where the program checks whether there is printable data in the main memory. If this is not the case (N), the program goes to step 108, at which the current printer status bit as well as the next printer status bit are set at low value in the priority job register 36. Thereafter the program has been completed (E) and the program returns to the starting point S and subsequently to step 102, at which it gets in a waiting position.
When the answer on the check at step 104 is positive (Y), the program goes to step 110. At this step the printing section 16 will print the job having the priority status bit as well as the print priority status bit at a high value. After this the program goes to step 112, at which the print priority status bit of the job in question as well as the current printer status bit are set low. Then the program goes further to step 122.
When the check on the demand of step 106 results in a positive answer (Y), the program goes to step 114, at which the data for the next page of the sequence in the main mode are retrieved from the main memory 32 and delivered to the printing section 16 for obtaining a copy. Then the program goes to step 116 at which the current printer status bit is set low.
In the next step 118 it is checked whether the preset number of copies of this page (or a cluster of pages) has been reached. In case that the desired number of copies have been printed (Y), the program goes to step 119, in which the image data for this page (or a cluster of pages) are erased. In practice, this means that the memory section where the respective image data had been stored is made available for the storage of new data that might be received through one of the input channels 10. Thereafter, the program goes to step 120.
If, however, it is determined in step 118, that the required number of copies of the page retrieved from the main memory 32 have not been reached (N), the program goes directly to step 122.
In step 120 it is checked whether the last page of the current job has been completed, and if this is the case (Y), the program goes to step 121, in which the printing parameters for the completed job will also be erased.
Thereafter, the program goes to step 122.
In step 122 the next printer status bit will be set high. In the next step 124 it is checked whether the priority status bit of the last printed priority job is reset at a low value. It can be remarked, that the priority status of a priority job is assumed to get a low value if the "ready" button has been depressed or if the printing parameters for the priority job have not be readjusted within a predetermined time interval after the last page of the priority job has been printed.
If the check in step 124 yields that the priority status of the last printed priority copy is reset at a low value (Y), the program goes to step 126. In this step it is checked whether the desired number of copies of the priority job was held on one (N = 1). If it is the case (Y), the program goes to step 128, at which the priority memory 34 for the respective data is erased. For it can be accepted that the user wanted to have only a test copy of good quality. Subsequently, the program returns to step 102. If it is determined in step 126 that the desired number of copies of the last page of the priority job was not equal to one, the program returns to step 102 without carrying out the step 128. For it can be accepted that the user needs a plurality of copies of the last priority job, which will be produced in the main mode. The steps 126 and 128 which refer to the priority memory are the counterparts of the steps 118 and 119 which refer to the main memory 32. If it is determined in step 124 that the priority status of the job is still at a high value (N), the program omits the steps 126 and 128 and returns to step 102.
During a print mode the presence of a regular copying job or a priority copying job in the memory will cause the next printing status bit to become high.
The program described above is adapted to make in each immediate copy mode not only one test copy but also a plurality of different test copies. In the latter case the printing section 16 will print successively the different test copies at step 110 before the program goes further to step 112.

If the program shown in Fig. 5 is used for realizing the operation scheme shown in Fig. 4, the data for the immediate job of which the test copy has been made remain in the priority memory 34. Unless these data are printed in the immediate copy mode, they will be printed only after all other jobs stored in the main memory 32 have been printed. The job loses its priority status so that it can give no longer a contribution to a positive answer on the check in step 102. If it is desired that the job for which the test copy has been made (priority job in the given example) is re-inserted in the original sequence of jobs after the respective priority status bit is set at a low value and moreover its pointer is removed from the priority job register 36, the memory sections where the priority job had been stored is not erased but redefined as a section of the main memory 32 and is labelled with the original ordinal number (e.g. "2").

In the system described above, one and the same command button, i.e. the "interrupt copy" button can be used for carrying out a complete job immediately or for making a test copy only. In a modified example of the invention, the single "interrupt copy" button may be replaced by an "interrupt job" button and a separate "test copy" button. In this case, the "interrupt job" button causes the system to interrupt the running job for carrying out an interrupt job and to cancel the data for the interrupt job when the interrupted job is resumed. The "test copy" button causes the system to interrupt the running job for making only a test copy of a subsequent job and to hold the data for the subsequent job until this job is carried out in the course of the normal operating sequence.

As already mentioned the user interface is adapted to permit the operator to preview a plurality of pages of a scanned document simultaneously and to adjust the operating parameters of the reproduction system separately for each page. Specifically, the images of the pages displayed may be compared to each other and may be adjusted so as to achieve a uniform appearance even when the images on the source documents are non-uniform.
For this purpose the image processor 12 of Fig. 1 is adapted to modify the appearance of the image in accordance with preselected operating parameters such as brightness of the image, contrast, reproduction scale and the like.

Thereto, the user interface 18 is provided for permitting the user to input operating instructions and for displaying status information to the user, and is generally comprised of input means, display means 80, a preview memory 82 and associated program software which is implemented in the control unit 20. The state of the art as to a simple adjustment of operating parameters of a digital image reproduction system may be based on US-A 4 740 814 and the disclosure of Ringle and Van Dyke in IBM Technical Disclosure Bulletin, Vol.23, (1981), No. 8, pages 3794/95. In the user interface to be used in the preferred digital image reproduction system 1 of Fig. 1, a cathode ray tube (CRT) having a touch-sensitive graphic screen 84 is provided as a combined display and input device. The CRT is controlled by a CRT driver 86 to display graphic information and text information delivered by the control unit 20. The screen 84 is provided with a touch-sensitive layer which is controlled by a sensor control system 86. When the user touches a portion of the screen 84, this is detected by the touch-sensitive layer, and a signal indicating the location that has been touched is transmitted to the control unit 20. This signal is interpreted as an instruction command. The relation between the various locations on the screen 84 and the meanings of the associated touch signals is variable dependent on the graphic information that is presently displayed on the screen 84. Thus, the user interface 18 is capable of simulating different arrays of control buttons that may be used for inputting instruction commands. Further, the user interface 18 comprises a key unit 90 having a number of mechanical input keys.

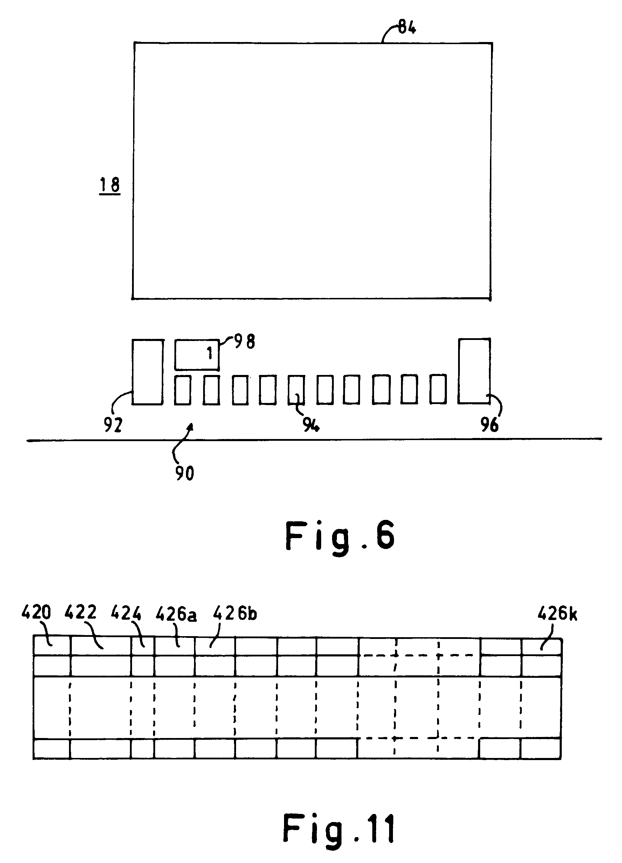

Fig. 6 is a view of the operating panel of the copier and shows the touch-sensitive graphic screen 84 and the key unit 90.

The key unit 90 is equivalent to that of a conventional electrostatic copying machine and comprises a start key 92, numerical keys 94 for selecting the desired number of copies and a stop key 96 which may be used for interrupting the copying job. Further, the key unit 90 comprises an interrupt copy button 98 as described hereinbefore.
The graphic screen 84 is suitable for indicating a selected number of copies. When the digital copier is ready to accept a new copying job, it is in a standard mode of operation, so that the digital copier may easily be operated by an untrained user who is only required to key-in the desired number of copies and to press the start key 92.

When, on the other hand, an operator wishes to make use of the various special functions of the digital copier, he communicates with the copier mainly via the touch-sensitive screen 84 of the interactive interface 18, as will be explained below.

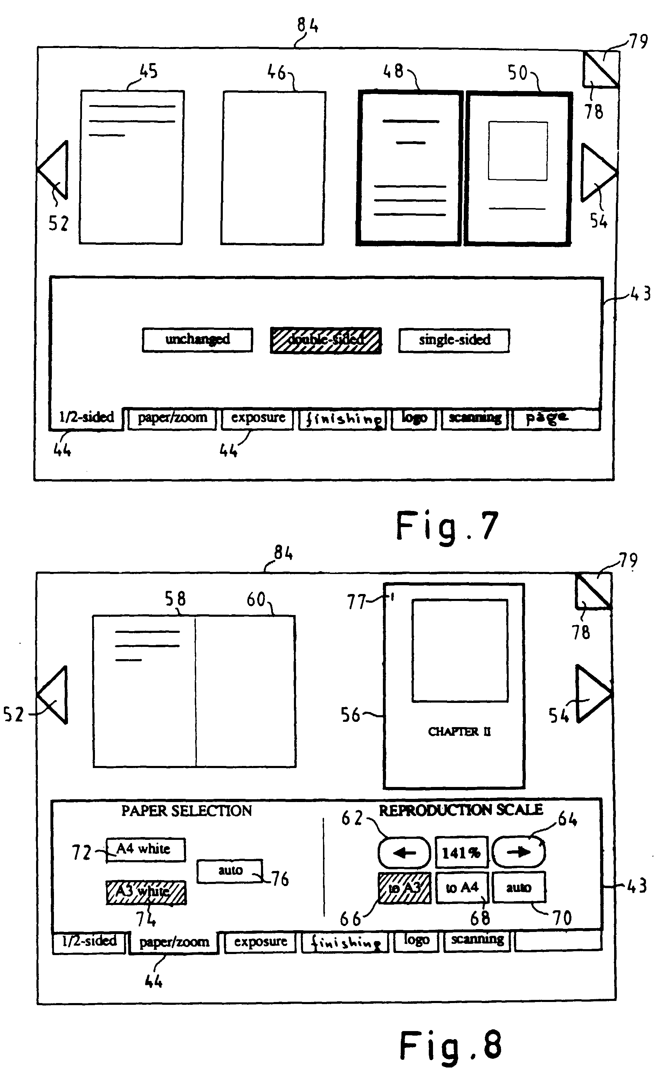

Figs. 7 and 8 show examples of images that may be displayed on the screen 84. In general, the lower part of the screen 84 is reserved for displaying a selected one of a plurality of dialog frames 43. Each of these dialog frames is related to a function block of the digital copier and is so designed that the user may selector adjust the operating parameters which belong to the associated function block of the digital copier. The dialog frames are shaped like cards of a telephone register and are each provided with a downwardly projecting tab 44 on which the name of the function block is indicated. The tabs 44 of the total of the dialog frames 43 are visible at the same time in a line at the bottom of the screen. When the user wishes to select a specific dialog frame in order to adjust the operating parameters of the associated function block, he touches with his finger the corresponding tab, i.e. the portion of the touch-sensitive screen 84 where the tab 44 is displayed, and thus causes the control program of the user interface 18 to shift the associated dialog frame 43 to the front level.
Then, the desired operating parameters may be set by touching the buttons displayed in the dialog frame.

The upper portion of the screen 84 is used mainly for displaying on a reduced scale the images of several pages of a document that has been scanned and of which a copy is to be printed. In the example shown in Fig. 7, the images of a limited number of pages 45, 46, 48, 50 are displayed in the order in which they have been scanned. When the document comprises more pages than can be displayed together, the row of pages may be scrolled by pressing triangular buttons 52, 54 which are displayed on the left and right margins of the screen. When the left button 52 is touched, the page images are shifted, for example, to the right so that new pages appear at the left end of the row. Conversely, when the button 54 is touched, the images are shifted to the left and new pages appear at the right end of the row. When the user wants to see the previous job once more on the display, he should touch a so-called "previous-job" selection button 78. However, when the user wants to see the next job on the display, he should touch a so-called "next-job" selection button 79. The image information for the pages that are displayed on the screen 84 is retrieved from the special or preview memory 82 filled with information derived from the actual printing information in the image memory 14 and is subject to the image processing operations in accordance with the actual parameter settings. Consequently, the images are displayed as they will appear on the printed copies. Thus, the user interface 18 provides a reduced image of the pages. This occurs as good as possible according to the so-called WYSIWYG concept ("What You See Is What You Get"). When the operating parameters of the copier are changed by means of the dialog frames 43, the effect of the new parameter settings is immediately shown on the display.

According to an important feature of the user interface 18 described herein, the operating parameters may be set individually for each page of the document instead of an adjustment of the complete document as can be learned from the state of the art. To this end, the individual pages of the document can be selected by touching the image of the respective page on the touch-sensitive screen 84. The images of the selected pages are high-lighted by displaying a dark frame surrounding the page image, as is shown for the pages 48 and 50 in Fig. 7. When one or more operating parameters of the machine are changed by means of the dialog frames 43 while only part of the pages are selected, the changes of the operating parameters apply only to the selected pages, and the previous parameters remain valid for the other pages. Since, nevertheless, the images of the pages which are not selected are displayed on the screen 84, the operator can observe how the readjustment of the parameters for the selected pages changes the appearance of these pages in relation to the other pages. The deselection of a selected page occurs by touching the image of this page once more.

In a possible embodiment shown in Fig. 7, the operating parameters adjustable by the user and the corresponding instruction commands are organized in seven function blocks which will now be described in detail.

### 1. Selection between single-sided and double-sided copies "1/2-sided").

Since the printing section 16 has a default setting mode for printing on the front side as well as on the rear side of the receiving paper, the user has the additional possibility to select between singe-sided and double-sided copies. The dialog frame 43 associated with this function block is shown in Fig. 7 and comprises three command buttons termed "unchanged", "double-sided" and "single-sided". The preferred print mode is selected by touching the respective command button. The print mode which is presently valid for the selected pages is indicated by a dark frame high-lighting the associated command button, as is shown for the button "double-sided" in Fig. 7. In the usual mode being a default setting mode, the copies are printed in the same mode as the original document. For the purpose of scanning both single-sided originals as well as double-sided ones, the scanner (22 or 24) is provided with sensors for detecting whether a document sheet carries an image on both sides or on one side only, and the printing section is controlled depending on the output signal of this sensor so that single-sided copies are formed from single-sided originals and double-sided copies are formed from double-sided originals. When the user wishes to change his choice (e.g. from "double-sided" to "unchanged"), he needs only to touch the button "unchanged".

When a sequence of pages of the document is to be printed as single-sided copies, as is the case for the pages 48, 50 Fig. 7, the images of the pages are positioned in uniform intervals. On the other hand, when double-sided copies are to be formed as in case of the pages 45, 46 in Fig. 7, the images of the pages are grouped in pairs (a cluster), so that the pages forming the front side and the rear side of a receiving sheet are displayed with only a narrow spacing therebetween. Thus, the user can realize at a glance how the copies will be printed. As a consequence of the digital concept of this copier, in which the scan and the print modes can operate independently of each other, the desired print mode "double-sided" or "single-sided" can be chosen irrespective of the state of the original page i.e. single-sided or double-sided.

### 2. Selection of receiving paper and adjustment of reproduction scale ("paper/zoom").

Since a change of the enlargement or reduction scale requires in most cases an appropriate selection of the receiving paper in order to provide the correct format, these functions are combined in a single function block, as is shown in Fig 8. In the right half section of the dialog frame 43 according to Fig. 8, the selected reproduction scale is displayed. In the upper part of this section the reproduction scale is indicated as a percentage value. In the example shown in Fig. 8, an enlargement factor of 141% has been set for a selected page 56.
Accordingly, the image of the page 56 is enlarged with regard to the image of pages 58 and 60 for which a one to one reproduction has been selected. Command buttons 62, 64 displayed in the dialog frame 43 are provided for decreasing and increasing the reproduction scale, respectively, in steps of for example 1%. Further, in the lower part of the right section of frame 43, the copier may be instructed to reduce or enlarge the image of the page to the format A3 or A4 by touching a command button 66 or 68. When a command button 70 "auto" is actuated, the reproduction scale is automatically adjusted to the format of the selected receiving paper. In a further embodiment of the copier according to the invention it is possible to illustrate all changes of the reproduction scale by corresponding changes of the size of the image on the selected page. If, for example, the user wishes to adapt the size of a small or large page to the size of an A4 page, he may press the button 64 or 62 respectively until the images on the pages appear in equal sizes.

On the left half of the dialog frame 43 of the embodiment, in Fig. 8, two command buttons 72, 74 are displayed as examples for selecting between various trays loaded with different kinds of receiving paper. Furthermore, the format and the colour of the paper can be detected and indicated on the corresponding command buttons. In the example shown in Fig. 8, the upper tray is loaded with A4 paper while the lower tray is loaded with A3 paper. If the upper and lower trays are loaded with paper of different colours, the user may for example select white paper for the text pages of a document and coloured paper for appendices. The image of the pages for which coloured paper has been selected would then appear shaded on the screen 84. The latter choice can be done by touching a button "A4 coloured" (not shown) on the section "paper selection" of frame 43.

By means of a command button 76 ("auto") the user may switch to an automatic mode in which the paper is selected automatically depending on the properties of the original document and/or on the selected reproduction scale.

### 3. Adjustment of image brightness and contrast ("exposure").

The dialog frame 43 for the third function block which is not shown in detail in the drawings, is also composed of two sections which provide command buttons for adjusting the overall brightness of the image and the contrast of the image. The results of the adjustment operations are visualized by corresponding changes of the image brightness and contrast of the images of the pages displayed on the screen. With the adjustment operations of this function block it is possible for example to provide a uniform brightness for the pages of the whole document or to select a comparatively low contrast for pages including half-tone images such as photographs and a high contrast or pages including text only.

Each section of the dialog frame includes a control button "auto" for switching to a mode of operation in which the brightness and the contrast,
respectively, is adjusted automatically in response to the detected brightness and density distribution of the original documents.

### 4. Handling and discharge of copy sheets ("finishing").

The next function block provides commands for determining how the copy sheets shall be discharged. An example of such a block will be explained now. When a command button "staple" is selected, the copy sheets are simply collected in the printing order, and are stapled subsequently. In such a case a wide margin may be preferred. At the same manner as indicated above as to the reproduction scale in the upper part of the right section in frame 43 the required size of margin on a page can be selected. Thereto, a window is available for displaying the set size of the margin, while at both sides of this window touch-sensitive screen buttons are available for the adjustment of the margin. The rear side of a double-sided page has its own point of attention as to the margin. The pages which belong to sheets for which the mode "staple" has been selected, such as the page 56 in Fig. 8, are marked by a symbolic staple 77, i.e. small vertical bar in the respective part of the page.

When a command button ("loose-leaf") is touched, the copies of the document are collected in the usual manner, and no further action as to stapling the copies will be executed.

The dialog frame 43 pertaining to the function block "finishing" can also be fed by a further command button termed "book format" (not shown) which causes the copy handling system to discharge the copies in book format. This mode is known from US-A 4 640 611 and JP-A 62 122375.
When the book format has been selected, the images of the pages are displayed on the screen 84 in such a manner that the second side of one sheet and the first side of the subsequent sheet are joined with each other and appear like the pages of an opened book, as is shown for the pages 58 and 60 in Fig. 8.

### 5. Selection of logos, page numbers and the like ("logo").

The fifth function block provides commands for pasting a predetermined header or footer, for example the logo of a business company, on selected sheets of the document. Further, this function block provides commands for indicating the actual data on selected pages of the document and commands for inserting page numbers on each sheet. The position of the page number (on top or at the bottom of the sheet or at the left or right corner) may be selected manually by activating appropriate control buttons or may be adapted automatically to the format (book format or stapled sheets) in which the copies are to be discharged.

### 6. Selection of the scanning mode ("scanning").

Although the input-section 10 is adapted to distinguish automatically between double-sided and single-sided original documents, there may be cases where a copy shall be formed of only one side of a double-sided document. The function block "scanning" provides command buttons with which the automatic detection of double-sided and single-sided documents may be cancelled and the system may be caused to scan only the first side, only the second side or both sides of each sheet of the original document, irrespective of whether or not an image is present on either side of the sheet. When the scanning mode "only the first side" has been selected for double-sided documents, only the images of the respective first sides of the document sheets appear on the screen 84.

### 7. Special functions ("page").

The last function block includes short-cuts for the selection of pages and commands for inserting or deleting blank pages in or from the copying job.

As was described above, the individual pages of the copying job may be selected by touching on the images of the pages on the screen 84. However, when the document consists of a large number of pages, the selecting operation may become tedious if all pages are to be selected or deselected. For this reason, the dialog frame of the function block "page" includes command buttons for selecting all pages and for deselecting all pages at one time.
Further, when double-sided copies are to be printed, there frequently occurs a situation in which different parameter settings are required for the front and rear sides of the copy sheets. The "page" dialog frame includes command buttons for selecting and deselecting all even-numbered pages or all odd-numbered pages, so that the selecting operation is facilitated.

The possibility of inserting blank pages in the copying job is useful for example when a double-sided copy or a copy in book-format is to be formed in which each new chapter should begin on the first side of a sheet or on the right page of the book, respectively. Another useful application of the possibility to insert blank pages, preferably in combination with a selection of coloured receiving paper, is the insertion of separating sheets between different parts of the copying job. The blank pages are displayed on the screen 84 as empty pages, such as the page 46 in Fig. 7.

It should be noted that for each parameter that may be adjusted by the user, there is provided a default setting which is valid when the user does not make a special selection for this parameter. In general, the default settings correspond to those parameters or operating modes, such as the mode "auto", which are most frequently applicable. Accordingly, the user is only required to make special selections if he wishes to deviate from the standard mode.

Further, the control program for the user interface 18 is so designed that command buttons for functions which are not available or do not make sense in the present state of the digital copier are removed from the display, so that the user is prevented from inputting mistaken commands. If, nevertheless, a situation should occur in which the user has input an instruction which cannot be executed, an appropriate message is displayed on the screen 84 for advising the user how he may proceed.

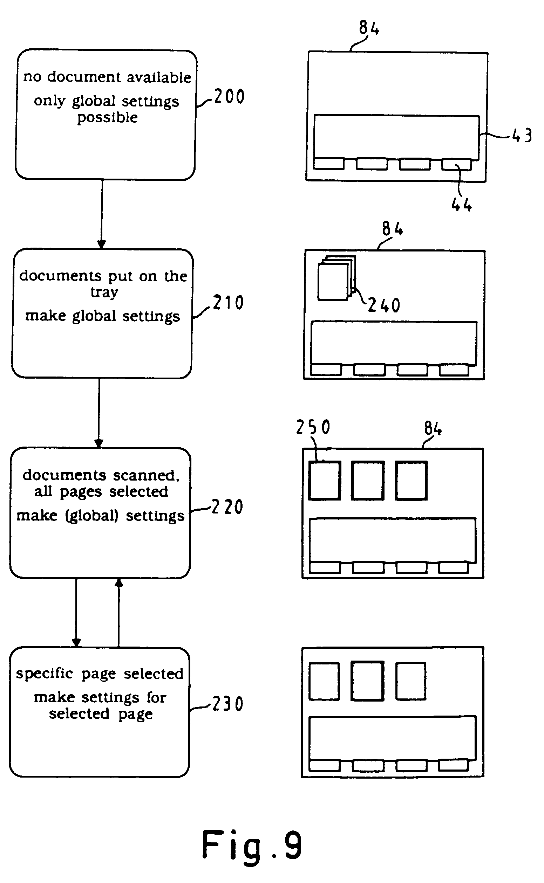

The screen 84 is used further for symbolically displaying the operating status of the copying machine as will be explained below with reference to Fig. 9.

Fig. 9 is a diagram showing different operating states of the digital copier and the respective associated images on the screen 84. In an initial stage 200, no original document is present on auxiliary scanner, and the screen 84 shows only the tabs 44 of the dialog frames 43. The operating parameters are set to the default values, and the digital copier may be operated simply by means of the key unit 90 as was described with reference to Fig. 6. However, the user may change the operating parameters by selecting an appropriate dialog frame 43 and inputting instruction commands which will then apply to all documents fed-in through the document feeder.

When a number of original documents is put on a scanner e.g. the auxiliary scanner 24, the presence of the documents is automatically detected. Then, the machine is in a state 210 in which it is easy to scan the original documents. The presence of the documents is symbolized on the screen 84 by displaying a stack of empty sheets 240 on the left side of the screen. An instruction command "view originals" is displayed in the image of the stack of copy sheets, and this image serves as a command button for initializing the scanning operation. In the state 210, the operating parameters may be changed in the same manner as in the state 200.

When the user touches the command button "view originals", the documents sheets are sequentially fed-in by the automatic document feeder and are scanned in accordance with the selected scanning mode. When the scan of a page has been completed, the image of one of the empty pages of the stack 240 is moved to the middle portion of the screen and the contents of the page is displayed in the image. As the scanning operation proceeds, the page images are sequentially moved to the center portion of the screen and are positioned side by side in a configuration corresponding to the selected print mode (single-sided, double-sided or book-format). If the number of pages exceeds a certain number, e.g. 4, and there are therefore too many pages for displaying them together on the screen, the pages are automatically scrolled in the direction of increasing page number, and the scroll buttons 52, 54 are displayed on the screen.

When all documents have been scanned, the machine is in a state 220 where the images of the pages 250 are shown on the screen and are highlighted by dark frames, indicating that the corresponding pages are selected. Consequently, adjustment operations carried out with the dialog frames 43 in the state 220 apply also to the whole document.

The user may now deselect part of the set of pages either by touching the images of the pages to be deselected or by using the "page" function block.

When only part of the pages has been selected, the machine is in a state 230 in which the adjustment operations carried out by means of the dialog frames 43 apply only to the selected pages. If, however the user wishes to change the global parameter settings, he may shift back to the state 220 by selecting all pages.

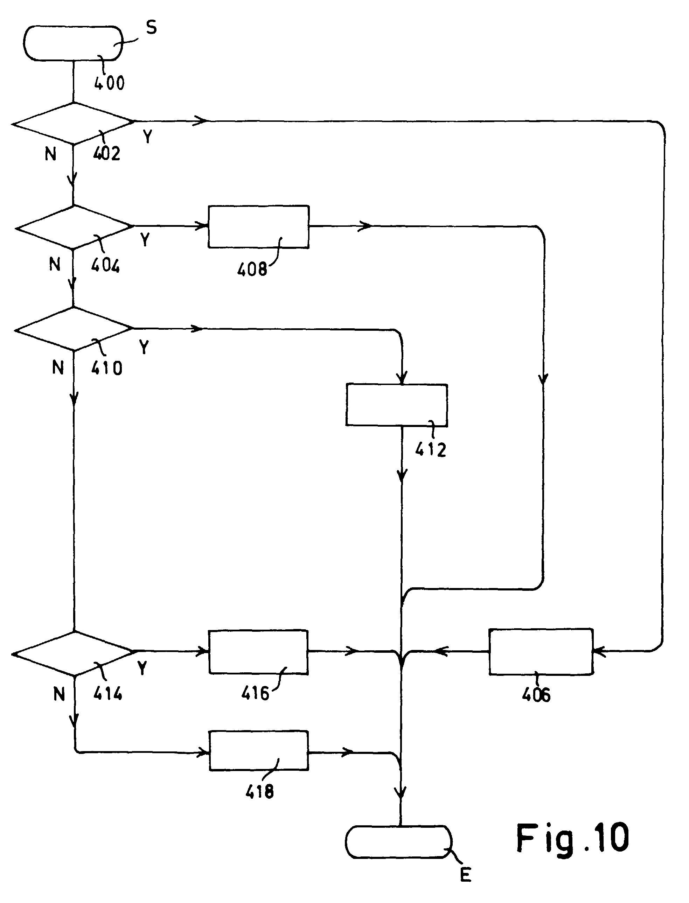

As already described above, the copying machine is capable to carry out the adjustment operations by means of the dialog frames 43 to be applied to the pages to be printed. A possible embodiment for carrying out these operations, will be explained below. When the copying machine is in the operating state 230 as indicated in Fig. 9, a program as shown by the flow diagram of Fig. 10 will be executed for adjusting the operating parameters to the desired values.
The parameter values so adjusted will be registered in a temporary memory, being a part of the preview memory 82, and further in the image memory 14. In the temporary memory, only the parameter data of the page images being visible on the screen 84, are available.
The information due to a page can be represented by a string of data, and for each string a separate part of the image memory is available. Such a memory part contains a number of fields which correspond to the number of the adjustable parameters for any page. A similar division of the memory space in the temporary memory is available for the parameter settings of the page images of the screen 84. A schematic view of a possible division of the storage capacity of the temporary memory for the parameter settings of the page images is illustrated in Fig. 11. A horizontal array of memory fields belongs to one page and is used for the registration of all the parameter data of the respective string. The first field 420 contains the job number obtained by touching the job selection button 78 or 79. The second field 422 contains the page number in that job. Amendment of the page numbering can be obtained by touching the scroll buttons 52 or 54. For each page the data of the both fields 420 and 422 correspond with a specific memory address in the image memory 14, so that the data in the temporary memory and in the image memory as to the visible page images are the same. The third field 424 contains information about the selection/deselection state of the respective page. The subsequent fields 426 a-k contain data with respect to the adjusted parameter values, or otherwise to the default values.
For the next page image on the screen 84 the next lower, horizontal array of memory fields is available. During a scrolling operation the data in each array of memory fields are shifted upwards or downwards in correspondence with the scroll-direction, and are replaced, in whole or in part by new data belonging to a subsequent or preceding page or pages.
Unless the new data have been determined already by adjustment at an earlier moment, the respective memory fields are filled with default parameter setting data.
The program of Fig. 10 will start at node 400 every time a touch button or touch window (i.e. a job selection button (78, 79), a scroll button (52, 54), a page image (45-50), a display frame selection tab (44) or parameter button on a dialog frame 43) is touched. At the first step 402 the question is put whether a button for adjusting a parameter was touched. If it is the case (Y), the program will go further to step 406. In this step the selected parameter value is brought in a highlighting situation and is also stored in the respective memory field of the temporary memory as well as in the corresponding field of the image memory 14. This occurs for all the page images being in the selected state, which is independent of the fact, whether the pages are made visible on the screen 84 (and therefore are in a highlighting position) or not. Moreover, previous parameter settings, if available, are overwritten in these memory fields. The selection state of these page images have been obtained from the memory fields 426 a-k. Thereafter, the program will be finished (E).

If the question of step 402 is answered negatively (N), the program will go to the next step 404. In this step, the question is put whether a tab (44) of a dialog frame (43) was touched. If so (Y), the program step 408 is performed, which involves that the respective dialog frame (43) is made visible. As a consequence of it the data in the preview memory 82 as indicated on the selected dialog frame (43) and related to the selected page(s) of the actual set can be replaced by new data, if necessary. Thereto, only the buttons representing the adjusted values and further the default values of the other parameters on the dialog frame 43, are highlighted. If however two or more page images being in a selected state, have different settings of a specific parameter, no setting value as to such a parameter will be high-lighted to overcome an ambiguous situation. As soon as the page images with a different parameter setting are de-selected, the common parameter value for the still selected page images is brought automatically in a high-lighting situation. This can be examined by comparing the information contents of the respective memory fields among each other. If all page images are in deselected state or if a parameter has not a particular setting, the respective button or buttons are highlighted as to their default values.
After step 408 the program will be finished (E). In case of a negative answer (N) in step 404 the program goes to step 410, in which the question is put whether a page image was touched and was brought in a selected position. If this is the case (Y), the program goes to step 412, in which the page image last selected will be highlighted on the screen 84. If this page image has one or more parameter settings values which differ from those of the other selected page images, the parameter settings being adjusted previously and being in a highlighting state, are now de-highlighted automatically, and the program will be finished (E). In case of a negative answer (N) in step 410, the program goes to step 414, in which the question is put whether a scroll button (52 or 54) was touched. If so (Y), the program goes to step 416, in which the fields of the temporary memory are overwritten with information as to the parameter values of the newly displayed page images, said information being available in the image memory 14. The dialog frame 43 already selected remains in this state. If now two or more page images have some different parameter settings as to the selected dialog frame 43, the respective settings cannot be brought in a highlighted state.

A negative answer in step 414 (N) involves a recent touching of a job selection button (78 or 79). The program goes to step 418, in which another job is selected in the image memory 14. To obtain a default setting for the upper part of the screen 84 in this case, the information of the first sequence of page images of that job will be stored in the temporary memory, and the respective page images, the dialog frame still selected and the parameter settings for this dialog frame are displayed or highlighted respectively on the screen 84. Thereafter the program will be finished (E).
Some parameter settings are also allocated to pages, which are not selected nor made visible. For example, if the button "staple" is touched, than this parameter setting is valid for all the pages of the job.

When the user has selected the operating parameters as desired, he may start the printing process by pressing the "start" key 92. The printed pages are sequentially moved to a stack (not shown) on the right side of the screen 84, thus indicating that the machine is "busy". In this state, the options for changing the operating parameters are limited to changes that will not conflict with the parameters for the pages that are printed already. The user may interrupt the printing operation by pressing the "stop" key 96.

When the machine is in the state 220 or 230 (Fig. 9) or in the printing state, a new set of original documents can be put on the document tray of a scanner e.g. the auxiliary scanner 24 and scanned-in, so that the user may adjust the operating parameters for a new copying job before or while the previous job is printed. In this way, the machine may be programmed to handle a plurality of copying jobs. A separate screen image is then provided for each of the jobs, but only one of the images can actually be displayed on the screen 84. The different screen images may be considered as a stack of non-transparent sheets which are overlayed on each other. In this case the uppermost sheet is visible on the screen 84. Two triangular buttons 78, 79 are displayed in the upper right corner of the screen 84, as is shown in Figs. 7 and 8. When the user touches the button 79, the screen images of the first pages of the next job are displayed, and by touching the button 78, the user may shift back to the previous job. Thus, it is possible to browse the plurality of jobs as desired.

It will be understood that the above described example of an embodiment of the invention may be modified in various ways.

For example, some of the functions or function blocks may be omitted, or additional functions may be implemented. Specifically, one might think of additional editing functions for erasing selected portions of the image information or for shifting selected image areas from one page to another.

Further, it is possible to provide a command for displaying a selected page on a larger scale so that the contents of the page is shown at a higher resolution and may be edited.

Further, it is possible to add functions for repositioning the images with respect to the receiving paper.

The concept of the invention may involve the concept of a digital image reproduction system which exists of a number of separate units for performing the functionality of the whole system. The concept may further be extended to copying machines that are capable of forming coloured copies.
Then, it will be convenient to add additional functions for adjusting the colours of the copies, for which purpose a colour display is preferred. In addition to separate buttons for adjustment of the individual colour printing parameters, the system can be provided advantageously with a specific "colour-button". The re-adjustment of the printing parameters can involve simply the touching of the photo-button, which results in a standard parameter setting for the colour-photo reproduction.

The scanning and printing devices provided in the scanning section and the printing section of the machine may be of any known type or may even be replaced by external devices.

Although the touch-sensitive graphic screen 84 is preferably as a combined input and display device, the display may alternatively be formed by a conventional cathode ray tube, a liquid crystal display or the like, and the input device may be formed by mechanical keys, a mouse for moving a cursor on the screen display, and the like. Otherwise, the key-unit 90 can also be a part of the touch-sensitive graphic screen 84.

## Claims

1. A digital image reproduction system including:
- printing means (16) for printing image data in accordance with respective associated reproduction parameters, said printing means being capable to operate in a continuous mode to produce printed copies at a predetermined frequency,
- input means (10) for inputting digital image data of documents to be reproduced,
- a user interface (18) permitting the user to set reproduction parameters for a next job independently of the operating stage of the printing means, and to assign an immediate print status to a copying job,
- memory means (14) for storing said image data and reproduction parameter data associated distinctly with the stored image data for executing a plurality of copying jobs, and
- a control system (20) for monitoring the operation of the input means (10), user interface (18), memory means (14) and printing means (16), for controlling the supply of image data and reproduction parameter data from said memory means to the printing means, for interrupting a further supply of data of the running job from the memory means to the printing means in a regular print mode, and for supplying subsequently instead of the data of the running job the data of a job having an immediate print status,
characterised in that,
the memory means (14) are adapted to retain the image data and the appertaining reproduction parameter data of a job having an immediate print status
- after said image data and said reproduction parameter data are used for execution of said job having an immediate print status and
- after the control system(20) resumes further supply of data of the running job from the memory means (14) to the printing means (16) and
- in that the user interface (18) is adapted to readjust the latter reproduction parameter data of said job having an immediate print status.

2. A reproduction system according to claim 1, wherein the control system (20) interrupts said further supply of data of the present job as soon as the control system is signalled that the printing means (16) have completed the printing action for the current page or a predefined cluster of pages of this job.

3. A reproduction system according to claim 1, wherein the user interface (18) comprises an "interrupt copy" button for assigning the immediate print status to a job to be printed.

4. A reproduction system according to claim 1, wherein the control system (20) automatically returns to the regular print mode when the setting of the reproduction parameters is not changed within a predetermined time interval.

5. A reproduction system according to any of the preceding claims, comprising copy distributing means (38) for directing the printed copies to different discharge ports (40, 42), depending on the job to which they belong.

6. A reproduction system according to claims 2 and 5, comprising a separate discharge port (42) for discharging the printed copies of a job having the immediate print status, said separate discharge port being preferably positioned close to an operating panel of the user interface (18).

7. A reproduction system according to any of the preceding claims, wherein the control system (20) is operable in a time-sharing mode in which the printing means (16) are supplied alternately with image data of individual pages or cluster of pages from different jobs.

8. A reproduction system according to claim 7, wherein the jobs to be printed in the time-sharing mode are attributable with variable weight factors determining the relative frequencies with which the printing means (16) deal with the jobs.

9. A reproduction system according to any of the preceding claims, wherein the priority or the weight factor of the individual jobs depends on the input channel (10) through which the image data of the respective job are received and/or on the remaining storage capacity of the memory means (14).

10. A reproduction system according to claim 1 wherein the user interface (18) comprises command input means (84, 88, 90) for adjusting operating parameters of the reproduction system, and display means (84, 86) for displaying a preview of the resultant copy, characterized in that, said display means (84, 86) are adapted to display the images of a plurality of pages (45, 46, 48, 50, 56, 58, 60) simultaneously, and said command input means (84, 80, 90) include means for selecting one or more individual pages and for setting the operating parameters separately for the selected page (56) or group of pages (48, 50).

11. A reproduction system according to claim 10, wherein the control system (20) of the user interface (18) is adapted to display the pages on a reduced scale and/or to scroll the displayed images of the pages across the screen (84).

12. A reproduction system according to claim 10 or 11, wherein the user interface (18) comprises a touch-sensitive screen (84) forming a combined input and display means.

13. A reproduction system as claimed in claim 12, wherein the individual pages are selectable by touching the image of the page on the screen (84).

14. A reproduction system as claimed in any of the preceding claims 10-13 wherein said command input means (84, 88, 90) are adapted to receive commands for adjusting at least one of the following operating parameters and for displaying the setting of the respective parameters, said parameters including:
- selection between single-sided and double-sided copies,
- selection of different kinds of receiving paper,
- reproduction scale,
- image brightness of the copies,
- contrast of the copies,
- selection of the format in which the copy sheets are to be discharged, e.g. sorted or unsorted, stapled or as single sheets, book format,
- configuration of headers and footers,
- selection of the scanning mode,
- position of the page image on the copy sheet.

15. A reproduction system as claimed in any of the preceding claims 10-14, wherein said command input means (84, 88, 90) are adapted to receive commands for selecting and deselecting all pages, all even-numbered pages or all odd-numbered pages of the document.

16. A reproduction system as claimed in any of the preceding claims 10-15, wherein the display means (84, 86) are adapted to change the positions of the images of the pages dependent on the present operating status of the reproduction system and on the selection between double-sided and single-sided printing, and adapted for displaying the actual positions of the images of the pages on said display means.

## Patentansprüche

1. Digitales Bildreproduktionssystem mit:
- einer Druckeinrichtung (16) zum Drucken von Bilddaten in Übereinstimmung mit jeweils zugehörigen Reproduktionsparametern, welche Druckeinrichtung in der Lage ist, in einem kontinuierlichen Modus zu arbeiten, um gedruckte Kopien mit einer vorgegebenen Frequenz zu erzeugen,
- Eingabemitteln (10) zum Eingeben digitaler Bilddaten von zu reproduzierenden Dokumenten,
- einer Benutzerschnittstelle (18), die es dem Benutzer unabhängig vom Betriebszustand der Druckeinrichtung gestattet, Reproduktionsparameter für einen nächsten Job einzustellen und einem Kopierjob einen Sofortdruck-Status zuzuweisen,
- Speichermitteln (14) zum Speichern der Bilddaten und zugehöriger Reproduktionsparameter-Daten getrennt mit den gespeicherten Bilddaten, zur Ausführung mehrerer Kopierjobs und
- einem Steuersystem (20) zum Überwachen des Betriebs der Eingabemittel (10), der Benutzerschnittstelle (18), der Speichermittel (14) und der Druckeinrichtung (16), zur Steuerung der Zufuhr von Bilddaten und Reproduktionsparameter-Daten von den Speichermitteln zu der Druckeinrichtung, zum Unterbrechen einer weiteren Zufuhr von Daten des laufenden Jobs von den Speichermitteln zu der Druckeinrichtung in einem regulären Druckmodus und zum anschließenden Zuführen der Daten eines Jobs mit einem Sofortdruck-Status anstelle der Daten des laufenden Jobs
dadurch gekennzeichnet, daß
die Speichermittel (14) dazu ausgebildet sind, die Bilddaten und die zugehörigen Reproduktionsparameter-Daten eines Jobs mit einem Sofortdruck-Status zu halten,
- nachdem diese Bilddaten und Reproduktionsparameter-Daten für die Ausführung dieses Jobs mit dem Sofortdruck-Status verwendet werden und
- nachdem das Steuersystem (20) die weitere Zufuhr von Daten des laufenden Jobs aus den Speichermitteln zu der Druckeinrichtung wieder aufnimmt,
- und daß die Benutzerschnittstelle (18) dazu ausgebildet ist, die letzteren Reproduktionsparameter-Daten des Jobs mit dem Sofortdruck-Status neu einzustellen.

2. Reproduktionssystem nach Anspruch 1, bei dem das Steuersystem (20) die weitere Zufuhr von Daten des vorliegenden Jobs unterbricht, sobald dem Steuersystem signalisiert wird, daß die Druckeinrichtung (16) den Druckvorgang für die aktuelle Seite oder eine vordefinierte Gruppe von Seiten dieses Jobs beendet hat.

3. Reproduktionssystem nach Anspruch 1, bei dem die Benutzerschnittstelle (18) eine "Interrupt-Kopie"-Taste aufweist, um einem zu druckenden Job den Sofortdruck-Status zuzuweisen.

4. Reproduktionssystem nach Anspruch 1, bei dem das Steuersystem (20) automatisch in einen regulären Druckmodus zurückkehrt, wenn die Einstellung der Reproduktionsparameter nicht innerhalb eines vorgegebenen Zeitintervalls geändert wird.

5. Reproduktionssystem nach einem der vorstehenden Ansprüche, mit einer Kopien-Verteileinrichtung (38) zum Weiterleiten der gedruckten Kopien zu verschiedenen Ausgabestationen (40, 42) in Abhängigkeit von dem Job, zu dem sie gehören.

6. Reproduktionssystem nach den Ansprüchen 2 und 5, mit einer besonderen Ausgabestation (42) zum Ausgeben der gedruckten Kopien eines Jobs, der den Sofortdruck-Status hat, wobei diese besondere Ausgabestation vorzugweise in der Nähe eines Bedienungsfeldes der Benutzerschnittstelle (18) angeordnet ist.

7. Reproduktionssystem nach einem der vorstehenden Ansprüche, bei dem das Steuersystem (20) in einem Time-Sharing-Modus betreibbar ist, in dem die Druckeinrichtung (16) abwechselnd Bilddaten von einzelnen Seiten oder Seitengruppen von verschiedenen Jobs erhält.

8. Reproduktionssystem nach Anspruch 7, bei dem den im Time-Sharing-Modus zu druckenden Jobs variable Gewichtsfaktoren zuweisbar sind, die die relativen Häufigkeiten bestimmen, mit denen die Druckeinrichtung (16) die Jobs behandelt.

9. Reproduktionssystem nach einem der vorstehenden Ansprüche, bei dem die Priorität oder der Gewichtsfaktor der einzelnen Jobs vom Eingangskanal (10) abhängt, über welchen die Bilddaten des betreffenden Jobs empfangen werden, und/oder von der verbleibenden Speicherkapazität der Speichermittel (14).

10. Reproduktionssystem nach Anspruch 1, bei dem die Benutzerschnittstelle (18) Befehlseingabemittel (84, 88, 90) zum Einstellen von Bedienungsparametern des Reproduktionssystems und Anzeigemittel (84, 86) zur Darstellung einer Vorschau der resultierenden Kopie aufweist, dadurch gekennzeichnet, daß die Anzeigemittel (84, 86) dazu ausgebildet sind, die Bilder mehrerer Seiten (45, 46, 48, 50, 56, 58, 60) simultan darzustellen, und die Befehlseingabemittel (84, 88, 90) Mittel zur Auswahl einer oder mehrerer einzelner Seiten und zum gesonderten Einstellen der Bedienungsparameter für die ausgewählte Seite (56) oder Seitengruppe (48, 50) aufweisen.

11. Reproduktionssystem nach Anspruch 10, bei dem das Steuersystem (20) der Benutzerschnittstelle (18) dazu ausgebildet ist, die Seiten in einem verkleinerten Maßstab darzustellen und/oder die angezeigten Bilder der Seiten über den Bildschirm (84) zu rollen.

12. Reproduktionssystem nach Anspruch 10 oder 11, bei dem die Benutzerschnittstelle (18) einen berührungssensitiven Bildschirm (84) aufweist, der eine kombinierte Eingabe- und Anzeigeeinrichtung bildet.

13. Reproduktionssystem nach Anspruch 12, bei dem die einzelnen Seiten durch Berühren des Bildes der Seite auf dem Bildschirm (84) auswählbar sind.

14. Reproduktionssystem nach einem der vorstehenden Ansprüche 10 bis 13, bei dem die Befehlseingabemittel (84, 88, 90) dazu ausgebildet sind, Befehle zum Einstellen wenigstens eines der nachfolgenden Bedienungsparameter zu empfangen und die Einstellung der betreffenden Parameter anzuzeigen, welche Parameter umfassen:
- Auswahl zwischen einseitigen und doppelseitigen Kopien.
- Auswahl zwischen verschiedenen Arten von Empfangspapier.
- Reproduktionsmaßstab,
- Bildhelligkeit der Kopien,
- Kontrast der Kopien,
- Auswahl des Formats, in dem die Kopienbogen auszugeben sind, z.B. sortiert oder unsortiert, geheftet oder Einzelbogen, Buchformat,
- Konfiguration von Köpfen und Füßen,
- Auswahl des Abtastmodus,
- Position des Seitenbildes auf dem Kopienbogen.

15. Reproduktionssystem nach einem der vorstehenden Ansprüche 10 bis 14, bei dem die Befehlseingabemittel (84, 88, 90) dazu ausgebildet sind, Befehle zum Auswählen oder zum Aufheben der Auswahl sämtlicher Seiten, aller geradzahligen Seiten oder aller ungeradzahligen Seiten des Dokuments zu empfangen.

16. Reproduktionssystem nach einem der vorstehenden Ansprüche 10 bis 15, bei dem die Anzeigemittel (84, 86) dazu ausgebildet sind, die Positionen der Bilder der Seiten in Abhängigkeit vom aktuellen Betriebsstatus des Reproduktionssystems und von der Auswahl zwischen einseitigem und doppelseitigem Drucken zu verändern und dazu ausgebildet sind, die aktuellen Positionen der Bilder der Seiten auf den Anzeigemitteln darzustellen.

## Revendications

1. Système de reproduction d'images numériques comprenant :
- des moyens d'impression (16) pour imprimer des données d'image en fonction de paramètres associés respectifs de reproduction, lesdits moyens d'impression étant à même de fonctionner dans un mode continu pour produire des copies imprimées à une fréquence prédéterminée,
- des moyens d'entrée (10) pour introduire des données d'image numériques de documents devant être reproduits,
- une interface d'utilisateur (18) permettant à l'utilisateur de régler des paramètres de reproduction pour un travail suivant, indépendamment du stade de fonctionnement des moyens d'impression, et affecter un état d'impression immédiat à un travail de copiage,
- des moyens de mémoire (14) pour mémoriser lesdites données d'image et lesdites données de paramètres de reproduction associées de façon distincte aux données d'image mémorisées pour exécuter une pluralité de travaux de copiage, et
- un sytème de commande (20) pour contrôler le fonctionnement des moyens d'entrée (10), de l'interface d'utilisateur (18), des moyens de mémoire (14) et des moyens d'impression (16), et pour commander l'envoi de données d'image et de données de paramètres de reproduction depuis lesdits moyens de mémoire aux moyens d'impression, pour interrompre un envoi ultérieur de données du travail en cours, depuis les moyens de mémoire aux moyens d'impression dans un mode d'impression régulier, et pour envoyer ultérieurement, à la place des données du travail en cours, des données de travail possédant un état d'impression immédiat,
caractérisé en ce que
les moyens de mémoire (14) sont adaptés pour retenir les données d'image et les données de paramètres de reproduction, qui sont associées, d'un travail ayant un état d'impression immédiat,
- après que lesdites données d'image et lesdites données de paramètres de reproduction ont été utilisées pour l'exécution dudit travail possédant un état d'impression immédiat, et
- après que le système de commande (20) a repris la poursuite de l'envoi de données du travail en cours depuis les moyens de mémoire (14) en direction des moyens d'impression (16), et
- en ce que l'interface d'utilisateur (18) est adaptée pour réajuster les dernières données de paramètres de reproduction dudit travail possédant un état d'impression immédiat.

2. Système de reproduction selon la revendication 1, dans lequel le système de commande (20) interrompt ladite poursuite de l'envoi de données du travail actuel dès que le système de commande signale que les moyens d'impression (16) ont achevé l'action d'impression pour la page actuelle ou un ensemble prédéfini de pages de ce travail.

3. Système de reproduction selon la revendication 1, dans lequel l'interface d'utilisateur (18) comprend un bouton "interruption du copiage" servant à affecter un état d'impression immédiat à un travail devant être imprimé.

4. Système de reproduction selon la revendication 1, dans lequel le système de commande (20) revient automatiquement au mode d'impression régulier lorsque le réglage des paramètres de reproduction n'est pas modifié au cours d'un intervalle de temps prédéterminé.

5. Système de reproduction selon l'une quelconque des revendications précédentes, comprenant des moyens (38) de distribution de copies pour diriger les copies imprimées vers différents orifices d'évacuation (40,42), en fonction du travail dont elles font partie.

6. Système de reproduction selon les revendications 2 et 5, comprenant un orifice séparé d'évacuation (42) pour évacuer les copies imprimées d'un travail présentant l'état d'impression immédiat, ledit orifice séparé d'évacuation étant positionné de préférence à proximité d'un panneau d'ouverture de l'interface d'utilisateur (18).

7. Système de reproduction selon l'une quelconque des revendications précédentes, dans lequel le système de commande (20) peut agir selon un mode à partage du temps, dans lequel les moyens d'impression (16) reçoivent alternativement des données d'image de pages individuelles ou d'un ensemble de pages provenant de travaux différents.

8. Système de reproduction selon la revendication 7, dans lequel des facteurs variables de pondération peuvent être attribués aux travaux devant être imprimés dans le mode à partage du temps, ces facteurs déterminant les fréquences relatives avec lesquelles les moyens d'impression (16) traitent ces travaux.

9. Système de reproduction selon l'une quelconque des revendications précédentes, dans lequel la priorité ou le facteur de pondération des travaux individuels dépend du canal d'entrée (10), par lequel les données d'image du travail respectif sont reçues et/ou de la capacité de mémoire restante des moyens de mémoire (14).

10. Système de reproduction selon la revendication 1, dans lequel l'interface d'utilisateur (18) comprend des moyens (84,86,90) d'entrée de commandes pour réaliser des paramètres de fonctionnement du système de reproduction, et des moyens d'affichage (84,86) pour l'affichage d'une vue préalable de la copie résultante, caractérisé en ce que lesdits moyens d'affichage (84,86) sont adaptés pour afficher simultanément les images d'une pluralité de pages (45,46,48,50,56,58,60), et que lesdits moyens (84,88,90) d'entrée de commande comprennent des moyens pour sélectionner une ou plusieurs pages individuelles et pour régler les paramètres de fonctionnement séparément pour la page sélectionnée (56) ou pour le groupe de pages (48,50).

11. Système de reproduction selon la revendication 10, dans lequel le système de commande (20) de l'interface d'utilisateur (18) est adapté pour afficher les pages à une échelle réduite et/ou pour faire défiler les images affichées des pages sur l'écran (84).

12. Système de reproduction selon la revendication 10 ou 11, dans lequel l'interface d'utilisateur (18) comprend un écran tactile (84) formant des moyens combinés d'entrée et d'affichage.

13. Système de reproduction selon la revendication 12, dans lequel les pages individuelles peuvent être sélectionnées par toucher de l'image de la page sur l'écran (84).

14. Système de reproduction selon l'une quelconque des revendications 10-13, dans lequel lesdits moyens (84,88,90) d'entrée de commande sont adaptés pour recevoir des commandes pour régler au moins l'un des paramètres suivants de fonctionnement et pour afficher le réglage des paramètres respectifs, lesdits paramètres comprenant :
- sélection entre des copies imprimées au recto et des copies imprimées recto-verso,
- sélection de différents types de papier de réception,
- échelle de reproduction,
- luminosité de l'image des copies,
- contraste des copies,
- sélection du format dans lequel les feuilles à copier doivent être évacuées, c'est-à-dire triées ou non triées, empilées ou sous la forme de feuilles individuelles, avec un format de livre,
- configuration d'en-têtes et de bas de pages,
- sélection du mode de balayage,
- position de l'image d'une page sur la feuille à copier.

15. Système de reproduction selon l'une quelconque des revendications 10-14, dans lequel lesdits moyens (84,88,90) d'entrée de commandes sont adaptés pour recevoir des commandes pour sélectionner et supprimer la sélection de toutes les pages, toutes les pages portant des numéros pairs ou toutes les pages portant des numéros impairs du document.

16. Système de reproduction selon l'une quelconque des revendications précédentes 10-15, dans lequel les moyens d'affichage (84,86) sont adaptés pour modifier les positions des images des pages en fonction de l'état actuel de fonctionnement du système de reproduction et lors de la sélection entre une impression recto-verso et une impression au recto, et aptes à afficher les positions actuelles des images des pages sur lesdits moyens d'affichage.
